# EUROPEAN PATENT SPECIFICATION

(11) **EP 4 514 759 B1**
(45) Date of publication and mention of the grant of the patent: **25.03.2026**
(21) Application number: 23723179.0
(22) Date of filing: 27.04.2023
(51) Int. Cl.: C03C 3/087, C03C 4/02, C03C 4/10

(54) **GREY GLASS SHEET WITH WIDE RANGE OF VISIBLE TRANSMISSION AND SUPERIOR NEAR INFRARED TRANSMISSION**
GRAUE GLASSCHEIBE MIT BREITER DURCHLÄSSIGKEIT IM SICHTBAREN BEREICH UND HERVORRAGENDER DURCHLÄSSIGKEIT IM NAHINFRAROTBEREICH
FEUILLE DE VERRE GRIS À LARGE GAMME DE TRANSMISSION VISIBLE ET TRANSMISSION PROCHE INFRAROUGE SUPÉRIEURE

(30) Priority: 29.04.2022 EP 22170714
(43) Date of publication of application: 05.03.2025
(73) Proprietor: AGC Glass Europe, 1348 Louvain-La-Neuve (BE)
(72) Inventor: BOGAERTS, Michel, 6041 Gosselies (BE)
(74) Representative: AGC Glass Europe
(86) International application number: PCT/EP2023/061190
(87) International publication number: WO 2023/209132

(56) References cited:
- WO-A1-2016/202606
- WO-A1-2016/202801
- WO-A1-2020/057926
- US-A1- 2014 017 500

## Description

### 1. Technical Field of the Invention

The present invention relates to a silicate glass sheet having grey aesthetics, that provides a wide range of transmission in the visible region while maintaining superior transmission in the near infrared region.

### 2. Description of the Prior Art

Design and aesthetics are important in many applications of cover glass sheets. In particular, the display market and/or car industry are seeking for a glass sheet of grey aesthetics.

Cover glass sheets are required for the development of autonomous cars, largely relying on LIDAR systems. Today, the trends and demand from the market is to have those LIDAR systems fully integrated in the car for the evident reasons of aesthetic and damage prevention. LIDAR systems are typically mounted behind internal face of one or more of its glazing. The last developments in LIDAR technologies for autonomous cars use near infrared wavelengths, most often around 900, 1050 and 1550 nm. Regular glasses used in automotive (clear, colored, coated, etc) are of soda-lime-silicate type and have the advantages, amongst others, to be highly mechanically, chemically and ageing resistant, with limited costs.

Recently, soda-lime-silicate glasses have therefore been developed to provide significantly higher transmission in the IR region ensuring good performance of the LIDAR system; hiding the unaesthetic element(s) of said system from the outside of the car and preserving the level of intrinsic resistance (mechanical, chemical, ageing) of regular glass, at reasonable costs : PCT publication WO2020/057926A1 describes silicate-type glass compositions comprising specific amounts of total iron, manganese and optionally chromium at specific ratios to provide high IR transmission in the region 1000nm - 2000nm, especially at wavelengths of interest 1050nm and 1550nm, thereby valuable within the context of autonomous cars, in particular those fully integrating LiDAR systems. Other solutions have been provided in PCT publications WO2020/200920A1 and WO2020/200912 describing a glass sheet of silicate-type having compositions based on iron, chromium and cobalt at specific amounts and ratios; to demonstrate high IR transmission at wavelengths of 850nm, 900nm and 950nm compatible with other LIDAR systems and while minimizing the amount of Cr⁶⁺ species produced. It has been found however that those glass compositions provide a very low visible transmission and therefore cannot be used in all applications, especially those combining both LIDAR systems and devices using visible light transmission such as displays devices and car mounted head lights and/or do not allow the obtention of cover glass sheet with grey aesthetics without the costly addition of another colorant.

WO2016/202689 proposes a glass composition based on a combination of chromium, cobalt and selenium to provide a transmission in the infrared greater than the transmission in the visible light, combined with a grey aesthetic. However, such composition requires very high amount of selenium to obtain the required transmission in infrared and the neutral color. Such high amount of selenium is to be avoided because of its volatility in molten glass at high temperature and therefore its processing difficulties in glass production.

Furthermore, it is well known to use cover glass sheets in displays to provide the necessary protection of the display device. For example, for the incorporation of display devices within cars, it is common that the cover glass sheet is larger than the display device. Typically, the surface of the cover glass sheet above the screen of the display device is textured to improve its optical properties and such can raise unacceptable difference in rendering between the zone of the cover glass sheet covering the display device and the zone not covering the display device, in particular when the display is switched off. This difference in appearance is even further increased when the zone of the cover glass sheet not covering the display device, is smooth and glossy for decorative purposes. Hence, car designers are seeking for cover glass sheet with grey aesthetics and/or different visible light transmission to overcome this difference in rendering.

The state of the art does not provide a solution on how to formulate a silicate type glass composition to be used as a cover glass sheet that combines appealing grey aesthetics, a wide range of visible light transmission while maintaining superior infrared light transmission. Moreover, such glass sheets should be easily cut by filamentation laser cutting for easy and cost effective production. Finally, such glass sheets must provide acceptable level of toxic components, like hexavalent chromium.

### 3. Summary of the invention

The present invention relates to a glass sheet of silicate-type having a composition comprising, in a content expressed as weight percentages by total weight of glass:

| | | |
|---|---|---|
| a. | Total iron (expressed as Fe₂O₃) | 0.02% - 0.8 %, |
| b. | Manganese (expressed as MnO) | ≥ 0.02 %, |
| c. | Chromium (expressed as Cr₂O₃) | 0.01% - 0.4%, |
| d. | Cobalt (expressed as Co) | 0.003% - 0.03%; and |

wherein the ratio R1 defined as [Fe₂O₃* / (49 + 0,43(Cr₂O₃* - MnO*))] is equal to or lower than 1.1; and the ratio R2 defined as [Fe₂O₃* / (34 + 0,3(Cr₂O₃* - MnO*))] is equal to or greater than 1; preferably is equal to or greater than 1.2, more preferably is equal to or greater than 1.3. Fe₂O₃*, MnO* and Cr₂O₃* are relative percentages with respect to the sum of the contents of total iron, manganese and chromium (Fe₂O₃ + MnO + Cr₂O₃).

In a preferred embodiment, the composition of the glass sheet of the present invention comprises a Fe²⁺ content, expressed in the form of FeO equal to or less than 50 ppm (FeO ≤ 50 ppm), preferably equal to or less than 25 ppm (FeO ≤ 25 ppm). Therefore, the composition of the glass sheet of the present invention preferably comprises a percentage of FeO relative to total Fe₂O₃ below 1 %, preferably below 0.9% by weight of the total composition.

It is an objective of the present invention to provide a glass sheet having a grey color. Hence, preferably, the glass sheet has a Color index C* = (a*²+b*²)^{1/2} equal to or lower than 3,5 wherein a* and b* are CIELab values measured for a sheet thickness of 4 mm, in transmission with illuminant D65, 10°, SCI.

It is a further objective of the present invention to provide a glass sheet that comprise as less as possible of the toxic hexavalent chromium form. Hence, preferably, the composition comprises hexavalent chromium at a level equal to or lower than 10 ppm (Cr⁶⁺ ≤ 10ppm), preferably equal to or lower than 5 ppm (Cr⁶⁺ ≤ 5 ppm) and more preferably is free of hexavalent chromium (Cr⁶⁺= 0ppm).

It is another objective of the present invention to provide glass sheet that offers a great flexibility of visible light transmission while maintaining superior infrared transmission. Therefore in a first preferred embodiment, the glass sheet has a visible transmission (TLD4) lower than or equal to 20% (TLD4 ≤ 20%), preferably equal to or greater than 2% and lower than or equal to 20% (2% ≤ TLD4 ≤ 20%). In such first embodiment, the composition preferably comprises in a content expressed as weight percentages by total weight of glass:

| | | |
|---|---|---|
| a. | Total iron (expressed as Fe₂O₃) | 0.2% - 0.8 %, preferably 0.2% to 0.6%; |
| b. | Manganese (expressed as MnO) | 0.1 % - 1%, preferably 0.3% - 0.9%; |
| c. | Chromium (expressed as Cr₂O₃) | 0.05% - 0.4%, preferably 0.1% - 0.3%; and |
| d. | Cobalt (expressed as Co) | 0.01% - 0.03%. |

In such first embodiment, the glass sheet preferably has an infrared transmission (T₈₅₀₋₉₅₀₋₁₀₅₀), measured according to standard ISO9050, at a specific wavelength of 850 nm (T₈₅₀), 950 nm (T₉₅₀) and/or 1050 nm (T₁₀₅₀), higher than 75%, preferably higher than 80%.

In a second preferred embodiment, the glass sheet has a visible transmission (TLD4) greater than 20% and lower than or equal to 50% (20% < TLD4 ≤ 50%). In such second embodiment, the composition of the glass sheet preferably comprises in a content expressed as weight percentages by total weight of glass:

| | | |
|---|---|---|
| a. | Total iron (expressed as Fe2O3) | 0.1% - 0.3%, preferably 0.12% - 0.28%; |
| b. | Manganese (expressed as MnO) | 0.15 % - 0.6%, preferably 0.2% - 0.55%; |
| c. | Chromium (expressed as Cr2O3) | 0.04% - 0.15%, preferably 0.045% - 0.12%; and |
| d. | Cobalt (expressed as Co) | 0.005%- 0.015%. |

In such second embodiment, the glass sheet has preferably an infrared transmission (T₈₅₀₋₉₅₀₋₁₀₅₀) at a specific wavelength of 850 nm (T₈₅₀), 950 nm (T₉₅₀) and/or 1050 nm (T₁₀₅₀), higher than 84%, preferably higher than 86%.

In a third preferred embodiment, the glass sheet has a visible transmission (TLD4) greater than 50% (50% < TLD4), preferably comprised between greater than 50% and lower than or equal to 65% (50% < TLD4 ≤ 65%). In such third embodiment, the composition of the glass sheet preferably comprises in a content expressed as weight percentages by total weight of glass:

| | | |
|---|---|---|
| a. | Total iron (expressed as Fe2O3) | 0.02% - 0.15%, preferably 0.035%- 0.11%; |
| b. | Manganese (expressed as MnO) | 0.02 % - 0.4%, preferably 0.025% - 0.28%; |
| c. | Chromium (expressed as Cr2O3) | 0.01% - 0.07%, preferably 0.015% - 0.04%; and |
| d. | Cobalt (expressed as Co) | 0.003% - 0.008%. |

In such third embodiment, the glass sheet has preferably an infrared transmission (T₈₅₀₋₉₅₀₋₁₀₅₀), at a specific wavelength of 850 nm (T₈₅₀), 950 nm (T₉₅₀) and/or 1050 nm (T₁₀₅₀), higher than 88%, preferably higher than 90%.

### 4. Detailed description of the invention

The invention relates to a glass sheet of silicate-type having a composition comprising, in a content expressed as weight percentages by total weight of glass:

| | | |
|---|---|---|
| a. | Total iron (expressed as Fe₂O₃) | 0.02% - 0.8 %, |
| b. | Manganese (expressed as MnO) | ≥ 0.02 %, |
| c. | Chromium (expressed as Cr₂O₃) | 0.01% - 0.4%, |
| d. | Cobalt (expressed as Co) | 0.003% -0.03%; and wherein |

the ratio R1 defined as [Fe₂O₃* / (49 + 0,43(Cr₂O₃* - MnO*))] is equal to or lower than 1.1; and the ratio R2 defined as [Fe₂O₃* / (34 + 0,3(Cr₂O₃* - MnO*))] is equal to or greater than 1. The components Fe₂O₃*, MnO* and Cr₂O₃* are defined as relative percentages with respect to the sum of the contents of total iron, manganese and chromium (Fe₂O₃ + MnO + Cr₂O₃).

The inventors have surprisingly found that the combination of the manganese, chromium and cobalt elements in specific amounts in a mid- to high-iron glass matrix (total iron from 200 ppm to 8.000 ppm) while addressing specific ratios R1 and R2 allows to reach a glass sheet having grey aesthetics and showing a wide range of visible transmission together with a high IR transmission in the region of 850nm to 1050nm. Furthermore, it has been found that such glass sheets are simple and inexpensive to manufacture and can easily be cut by filamentation laser cutting. Finally, it has been found that such glass compositions provide the required visible transmission and infrared transmission with an acceptable toxicity profile, i.e. a concentration of hexavalent chromium (Cr⁶⁺) species below 10ppm.

In order to obtain high transmission in the infrared region in soda-lime silicate glasses including intrinsically some amounts of iron coming as an impurity in the majority of the starting materials used, it is known to reduce at maximum the amount of ferrous Fe²⁺ ions in the glass. Indeed, ferrous ions (sometimes expressed as oxide FeO) in soda-lime-silicate glasses absorb in the near infrared region due to their broad absorption band centered on 1050 nm. In known chromium-containing low-iron glasses, chromium is added in an amount adapted to oxidize all Fe²⁺ into Fe³⁺ in order to get high near-IR transmission. As chromium is known since years as a classical powerful colorant for glass, increasing further the chromium content of the glass above the threshold required to fully oxidized iron will bring a strong decreasing of visible transmission while keeping the high level of IR transmission as Fe²⁺ is at zero-amount, as described in WO2015/091106. However, in those glasses, the amount of Cr⁶⁺ in the composition is high. It was surprisingly found by the inventors that it is possible to drastically reduce the amount of Cr⁶⁺ (while keeping high IR transmission) by carefully adjusting the balance of iron, chromium and manganese in a matrix richer in iron so that the final glass has both low Fe²⁺ and Cr⁶⁺ concentrations. Indeed, it has been found that it requires to balance the different components so that the ratio R2 defined as [Fe₂O₃* / (34 + 0,3(Cr₂O₃* - MnO*))] is equal to or greater than 1. Moreover, it is further required to keep ratio R1 defined as [Fe₂O₃* / (49 + 0,43(Cr₂O₃* - MnO*))] equal to or lower than 1.1 to assure high transmissions in the near infrared.

Fe₂O₃*, MnO* and Cr₂O₃* are defined as relative percentages with respect to the sum of the contents of total iron, manganese and chromium (Fe₂O₃ + MnO + Cr₂O₃)

Glass laser cutting has many advantages compared to traditional cutting methods known, such as smooth edge, no chipping and the possibility to cut easily various shapes. Two main laser techniques are widely used to cut glass. The first method involves cutting by bulk heating of the glass sheet with CO₂ laser operating at about 10.6 µm, i.e. at wavelength were silicate glass absorbs strongly electromagnetic radiations due to vibrations of the Si-O bonds. The second laser cutting method is the filamentation laser cutting usually performed with a Nd-YAG laser operating at 1064nm. In this method, the laser beam focuses inside the bulk of the glass generating a plasma modifying locally the refractive index. This physical change forces the laser beam to focus above the generated void. By successive self-focusing-defocusing steps, a filament of voids is generated inside the glass thickness. This line of fraction is then used to cut the glass sheet. This technique provides very smooth edges and avoid thermal damage of the glass material. Contrary to the CO₂ laser method, the filamentation laser cutting method requires low absorption at 1064 nm (near IR) to work efficiently. Typically, coloured glass comprising high amount of Fe²⁺, and therefore absorbing strongly in the near-infrared, are difficult to be cut by filamentation laser cutting. It has been found however that the glass sheets of the composition of the present invention, despites their grey colour aesthetics, do not strongly absorb the 1064nm IR radiation at their surface, therefore allows the laser filamentation to be formed through the glass sheet. Sheets made of the composition of the present invention can therefore be easily cut by filamentation laser cutting.

According to the invention, the composition has a ratio R1 defined as (Fe₂O₃* / (49 + 0,43(Cr₂O₃* - MnO*)) equal to or lower than 1.1 (R1 ≤1.1). Such R1 values allows reaching complete oxidization of iron into Fe³⁺, thereby avoiding Fe²⁺ species which absorb in the near infrared region. According to the invention, the composition has a ratio R2 defined as Fe₂O₃*/ (34 + 0,3(Cr₂O₃* - MnO*)) equal to or greater than 1 (R2 ≥1), preferably equal to or greater than 1.2 (R2 ≥1.2), preferably equal to or greater than 1.3 (R2 ≥1.3). Such R2 values allows reaching high transmission in the near infrared while keeping very low amount of toxic Cr⁶⁺. Fe₂O₃*, MnO* and Cr₂O₃* are relative percentages with respect to the sum of the contents of total iron, manganese and chromium (Fe₂O₃ + MnO + Cr₂O₃).

According to the invention, the composition comprises total iron (expressed in terms of Fe₂O₃) as follows: 0.02% - 0.8 wt%. In present description, when talking about total iron content in glass composition, "total iron" and "Fe₂O₃" are used as well and total iron is expressed in terms of Fe₂O₃.

According to an embodiment of the invention, the composition preferably comprises an Fe²⁺ content (expressed in the form of FeO) equal to or lower than 50ppm (FeO ≤50ppm), preferably equal to or lower than 25ppm (FeO ≤25ppm). This range of contents makes it possible to obtain highly satisfactory properties in terms of transmission of the IR radiation. The amount of FeO is of course higher for embodiments with high total iron (Fe2O3) and the quantity of acceptable FeO content can be preferably expressed in percentage of total iron. Acceptable FeO contents corresponds when the percentage of FeO relative to total iron is preferably below 1 %, more preferably below 0.9%.

One objective of the present invention is indeed to provide suitable glass composition that combines appealing grey aesthetics, a wide range of visible light transmission while maintaining superior infrared light transmission. This wide range of light transmission allows to provide grey glass sheet very opaque with hardly no visible light transmission to grey glass sheet with substantial visible transmission.

Therefore, in one preferred embodiment, the present invention is formulated such as to provide a visible transmission (TLD4) lower than or equal to 20% (TLD4≤ 20%), preferably equal to or greater than 2% and lower than or equal to 20% (2% ≤ TLD4 ≤ 20%) and do comprise in a content expressed as weight percentages by total weight of glass:

| | | |
|---|---|---|
| a. | Total iron (expressed as Fe₂O₃) | 0.2% - 0.8 %, preferably 0.2% to 0.6%; |
| b. | Manganese (expressed as MnO) | 0.1 % - 1%, preferably 0.3% - 0.9%; |
| c. | Chromium (expressed as Cr₂O₃) | 0.05% - 0.4%, preferably 0.1% - 0.3%; and |
| d. | Cobalt (expressed as Co) | 0.01% - 0.03%. |

Glass sheets with the above composition will typically demonstrate an infrared transmission at a specific wavelength of 850 nm (T₈₅₀), 950 nm (T₉₅₀) and/or 1050 nm (T₁₀₅₀), higher than 75%, preferably higher than 80%.

According to this embodiment of the invention, the composition preferably comprises an Fe²⁺ content (expressed in the form of FeO) equal to or lower than 25 ppm (FeO ≤ 25ppm).

In another preferred embodiment, the present invention is formulated such as to provide a visible transmission (TLD4) greater than 20% and lower than or equal to 50% (20% < TLD4 ≤ 50%) and do comprise in a content expressed as weight percentages by total weight of glass:

| | | |
|---|---|---|
| a. | Total iron (expressed as Fe2O3) | 0.1% - 0.3%, preferably 0.12% - 0.28%; |
| b. | Manganese (expressed as MnO) | 0.15 % - 0.6%, preferably 0.2% - 0.55%; |
| c. | Chromium (expressed as Cr2O3) | 0.04% - 0.15%, preferably 0.045% - 0.12%; and |
| d. | Cobalt (expressed as Co) | 0.005%- 0.015%. |

Glass sheets with the above composition will typically demonstrate an infrared transmission at a specific wavelength of 850 nm (T₈₅₀), 950 nm (T₉₅₀) and/or 1050 nm (T₁₀₅₀), higher than 84%, preferably higher than 86%.

According to this embodiment of the invention, the composition preferably comprises an Fe²⁺ content (expressed in the form of FeO) equal to or lower than 25 ppm.

In another preferred embodiment, the present invention is formulated such as to provide a visible transmission (TLD4) greater than 50% (50% < TLD4), preferably comprised between greater than 50% and lower than or equal to 65% (50% < TLD4 ≤ 65%) and do comprise in a content expressed as weight

| | |
|---|---|
| percentages by total weight of glass: | |
| a. Total iron (expressed as Fe2O3) | 0.02% - 0.15%, preferably 0.035%- 0.11%; |
| b. Manganese (expressed as MnO) | 0.02 % - 0.4%, preferably 0.025% - 0.28%; |
| c. Chromium (expressed as Cr2O3) | 0.01% - 0.07%, preferably 0.015% - 0.04%; and |
| d. Cobalt (expressed as Co) | 0.003% - 0.008%. |

Glass sheets with the above composition will typically demonstrate an infrared transmission at a specific wavelength of 850 nm (T₈₅₀), 950 nm (T₉₅₀) and/or 1050 nm (T₁₀₅₀), higher than 88%, preferably higher than 90%.

According to this embodiment of the invention, the composition preferably comprises an Fe²⁺ content (expressed in the form of FeO) equal to or lower than 15 ppm (FeO ≤ 15ppm), preferably equal to or lower than 10 ppm (FeO ≤ 10ppm).

In present description and claims, to quantify the visible transmission (also called luminous transmission/transmittance or TL) of a glass sheet, one considers the visible transmission with illuminant D65 for a sheet thickness of 4 mm (TLD4) at a solid angle of observation of 2° (according to standard ISO9050). The visible transmission (TL) represents the percentage of radiation flux emitted between wavelengths 380 nm and 780 nm which is transmitted through the glass sheet.

In present description and claims, to quantify the IR transmission, one considers the transmission for a sheet thickness of 4 mm at a solid angle of 2° at the specific wavelength of 850nm, 950nm or 1050nm (according to standard ISO9050), representing the percentage of radiation flux emitted at a specific wavelength in the near IR range namely 850 nm (T₈₅₀), 950 nm (T₉₅₀) or 1050 nm (T₁₀₅₀) which is transmitted through the glass sheet.

Cr⁶⁺ is generally an undesired species in product mainly for environmental and health reasons. Hexavalent chromium and its compounds are toxic when inhaled or ingested by the human body. Concentrations in Cr⁶⁺ in products is limited by regulations (RoHS directive (2011/65/EU,(EU)2015/863 and ELV directive (2000/53/EC,(EU)2016/774)) and is fixed at : Cr⁶⁺ < 0,1 wt%. However, this maximum threshold will probably become more restrictive in the near future and some customers currently ask for almost the absence of Cr⁶⁺ in the glass product. Hence, according to the invention, the composition preferably comprises a Cr⁶⁺ content ≤ 10ppm, more preferably the composition is Cr⁶⁺ ≤ 5 ppm and even more preferably is free of Cr⁶⁺. The Cr⁶⁺ content in glass can be computed, in a known manner, based on the transmission spectra and the linear absorption coefficients of the cation. These absorption coefficients are based on Bamford data (Bamford, C.R. (1977). Color generation and control in Glass. Glass Science and Technology, 2, pp224, Elsevier Scientific Publishing Company.)

According to another embodiment of the invention, the composition of the glass sheet is preferably free of lithium. By "free of lithium" according to the invention, it is meant that the composition comprises lithium (expressed as Li₂O) ≤ 0.1 wt%, preferably ≤ 0.05 wt% and even ≤ 0.01 wt%.

According to another embodiment of the invention, the composition of the glass sheet is preferably free of barium. By "free of barium" according to the invention, it is meant that the composition comprises lithium (expressed as BaO) ≤ 0.1 wt%, preferably ≤ 0.05 wt% and even ≤ 0.01wt %.

According to still another embodiment, the composition of the glass sheet comprises NiO in an content lower than 0.1 wt%, preferably lower than 0.01wt%, more preferably lower than 0.001wt% by weight of the total composition. Preferably, the composition of the glass sheet is free of NiO.

According to still another embodiment, the composition of the glass sheet comprises CuO in an content lower than 0.1 wt%, preferably less than 0.01wt%, more preferably less than 0.002wt% by weight of the total composition. Preferably, the composition of the glass sheet is free of CuO.

This meant that barium, lithium, nickel and/or copper elements are not intentionally added in the glass batch/raw materials and that, if it is present, their content in the composition of the glass sheet reaches only level of an impurity unavoidably included in the production.

In present description and claims, to evaluate the color of a glass, one considers CIELab values: a* and b*, measured for a sheet thickness of 4 mm, in transmission with illuminant D65, 10°, SCI. The grey aesthetics are defined by the color index C* calculated as C* = (a*²+b*²)^{1/2} equal to or lower than 3,5 (C* ≤ 3.5).

The term "glass", within the meaning of the invention, is understood to mean a completely amorphous material, thus excluding any crystalline material, even partially crystalline material (such as, for example, glass-crystalline or glass-ceramic materials). The glass sheet of the invention may be manufactured starting from melting a glass raw materials batch in a glass melting furnace/tank and then forming the resulting molten glass into the desired shape, using a floating process, a drawing process, a rolling process or any other process known to manufacture a glass sheet starting from a molten glass composition. In an embodiment of the invention, the glass sheet is a float glass sheet. The term "float glass sheet" is understood to mean a glass sheet formed by the known float glass process. Other forming/processing treatment may follow the manufacturing process. By "glass sheet" in present invention, it is meant a glass article in a sheet-like form including flat glass, curved glass, bent glass, lens, etc.

The glass sheet according to the invention may have varied sizes, from small sizes (for example, for cover lenses), through medium sizes (for example, for automotive glazing) to very large sizes (up to "DLF" or "PLF" sizes). The glass sheet according to the invention may also have a thickness of from 0.1 to 25 mm, depending on the targeted applications. Preferably, the glass sheet according to the invention has a thickness of from 1 to 8 mm and, more preferably, from 1.5 to 5 mm.

The silicate glass sheet according to the invention is made of glass which may belong to various categories. The glass can thus be a glass of soda-lime-silicate, aluminosilicate or borosilicate type, and the like. Preferably, the composition of the glass sheet comprises the following in weight percentage, expressed with respect to the total weight of glass :

| | |
|---|---|
| SiO₂ | 55 - 84% |
| Al₂O₃ | 0 - 18% |
| B₂O₃ | 0 - 18% |
| Na₂O | 0 - 20% |
| CaO | 0 - 15% |
| MgO | 0 - 12% |
| K₂O | 0 - 12% |
| BaO | 0 - 5%. |

In an embodiment, the composition of the glass sheet comprises MgO ≥ 0.1% and preferably, MgO ≥ 0.5 %.

More preferably, notably for low production costs reasons, the glass composition is a soda-lime-silicate-type glass. According to this embodiment, by "soda-lime-silicate-type glass", it is meant that the composition comprises the following in weight percentage, expressed with respect to the total weight of glass :

| | | | |
|---|---|---|---|
| SiO₂ | 60 - 78 wt% | 60 - 78 wt% | 60 - 78 wt% |
| Al₂O₃ | 0 - 8 wt% | 0 - 6 wt% | 1 - 8 wt% |
| B₂O₃ | 0 - 4 wt% | 0 - 1 wt% | 0 - 4 wt% |
| CaO | 0 - 15 wt% | 5 - 15 wt% | 0 - 4.5 wt% |
| MgO | 0 - 12 wt% | 0 - 8 wt% | 4-12 wt% |
| Na₂O | 5 - 20 wt% | 10 - 20 wt% | 5 - 20 wt% |
| K₂O | 0 - 10 wt% | 0 - 10 wt% | 0 - 5 wt% |
| BaO | 0 - 5 wt%. | 0 - 1 wt%. | 0 - 5 wt% |
| (MgO/(MgO+CaO)) | | | ≥ 0.5 |

In particular, examples of base glass matrixes for the composition according to the invention are described in published PCT patent applications WO2015/150207A1, WO2015/150403A1, WO2016/091672, WO2016/169823 and WO2018/001965.

The composition of the glass sheet can comprise, in addition to the impurities present in particular in the starting materials, a low proportion of additives (such as agents which help the melting or the refining of the glass) or of components originating from the dissolution of the refractories constituting the melting furnaces.

Advantageously, the glass sheet of the invention may be tempered, mechanically or chemically. It may also be bended/curved, or in a general manner, deformed to reach any desired configuration (by cold-bending, thermoforming,..). It may also be laminated.

According to one embodiment of the invention, the glass sheet of the invention may be covered by at least one coating. Examples of such coating are :
- a transparent and electrically conducting thin layer (i.e. a layer based on SnO2:F, SnO2:Sb or ITO (indium tin oxide), ZnO:Al or also ZnO:Ga;
- an antireflection layer;
- an anti-fingerprint layer or has been treated so as to reduce or prevent fingerprints from registering;
- a lay-out of black enamel for aesthetics and improvement of bonding;
- a network of silverprint for heating function; and/or
- an anti-soiling and/or hydrophobic layer.

The glass sheet of the invention can advantageously be used as an automotive glazing, especially as a trim. In such a case, in the context of autonomous cars, a LIDAR system may be fully integrated in the car (thereby guaranteeing aesthetic and preventing damages to the system), mounted behind internal face of said glazing. Therefore, the invention also relates to the use of the glass sheet according to the invention as an automotive glazing, preferably as a trim element; or as a cover lens for a LIDAR sensor.

Even if the context of present invention has been described with the specific application of car-integrated LIDAR systems, the glass sheet of the invention can also advantageously be used in any other technology requiring appropriate light transmission and/or grey aesthetics, together with very good performances in the near IR range, especially for 850nm-1050 nm. For example, it can be of value in the "Planar Scatter Detection" (PSD) or "Frustrated Total Internal Reflection" (FTIR) optical technology for detecting the position of one or more objects (for example, a finger or a stylus) on a surface of said sheet which, in view of its more or less intense grey colour, is capable of partially or completely hiding objects/components found behind/under it.

Other uses of the glass sheet of the present invention are:
- decorative interior panels in cars,
- decorative panel positioned in front of/around radiant heating, hiding (partially or completely) the unattractive side of the heating but allowing the IR radiation to pass and thus making possible a good output from said heating;
- architectural or decorative spandrel glass;
- cooking plate, in replacement of the expensive special glasses commonly used (vitroceram or borofloat or even pyrex);
- pointing device on portable computers (commonly known as "touchpad"), sometimes using a technology requiring infrared radiation. In this case, the glass sheet is preferably very dark, indeed even opaque, in color and thus hides the electronic components located under it;
- front face element of furniture and in particular of furniture intended to include remote controllable electrical/electronic appliances, hiding from view the unattractive side of such appliances but allowing the signal emitted by the remote controls to pass. This is because the majority of domestic electrical/electronic appliances (televisions, hi-fis, DVD players, games consoles, and the like) are remote controllable using a housing which emits signals in the near infrared region. However, this remote control system exhibits in particular two disadvantages: (i) the signal is often disrupted by the presence of secondary radiation in the visible region (sun, lights), which render it less sensitive, and (ii) it requires that the appliances be reachable by the IR signal of the remote control and thus these cannot be concealed inside an item of furniture, even if demand is nevertheless proceeding in this direction for aesthetic reasons.

Throughout the present text, when a range is indicated, the extremities are included, except if explicitly described in another way. In addition, all the integral and subdomain values in the numerical range are expressly included as if explicitly written. Also, throughout the present text, the values of content are in percentage by weight expressed with respect to the total weight of the glass (also mentioned as wt%), except if explicitly described in another way (i.e. in ppm). Moreover, when a glass composition is given, this relates to the bulk composition of the glass.

The person skilled in the art realizes that the present invention is by no means limited to the preferred embodiments described above. On the contrary, many modifications and variations are possible within the scope of the appended claims. It is further noted that the invention relates to all possible combinations of features, and preferred features, described herein and recited in the claims.

The following examples are provided for illustrative purposes, and are not intended to limit the scope of this invention.

### Examples

Different glass sheets/samples according to the invention and not according to the invention (comparative) were prepared, with variable amounts of total iron, manganese, chromium and cobalt, within 3 sets of examples.

For the preparation of the glass samples, the starting materials were mixed in the powder form and placed in a crucible for the melting, according to an identical base composition specified in the table below, and to which were added starting materials comprising total iron, manganese, cobalt and chromium in variable amounts as a function of the contents targeted in the final composition (it should be noted that the iron being already, at least in part, present in the starting materials of the base composition as impurity).

| ***Base composition*** | **Content [% by weight]** |
|---|---|
| CaO | 8.86 |
| K₂O | 0.01 |
| Na₂O | 12.96 |
| SO₃ | 0.35 |
| Al₂O₃ | 0.03 |
| MgO | 4.07 |
| SiO₂ | to 100% |

The optical properties of each sample, moulded and processed in the form of a sheet, were determined on a Perkin Elmer Lambda 950 spectrophotometer equipped with an integrating sphere with a diameter of 150 mm, and in particular:
- the near-infrared transmission was determined for a thickness of 4 mm for specific wavelengths, namely 850nm (T₈₅₀), 950nm (T₉₅₀), 1050 nm (T₁₀₅₀);
- the light transmission TLD4 was also determined according to the ISO9050 standard for a thickness of 4 mm at a solid observation angle of 2° (with illuminant D65) and for a wavelength range between 380 and 780 nm.

### Set#1

Examples 1 to 3 correspond to glass sheets according to the invention, presenting a TLD4 comprised between 3% and 20%. Comparative Examples A and B correspond to a glass with the required components but do not fulfil the ratio R2 defined as [Fe₂O₃* / (34 + 0,3(Cr₂O₃* - MnO*))] being equal to or greater than 1. The Comparative Examples C and D correspond to a glass with iron, manganese, chromium, cobalt and selenium. Those comparative examples do not fulfil the ratio R1 of [Fe2O3* / (49 + 0,43(Cr2O3* - MnO*))] being equal to or lower than 1.1. All comparative examples exhibit similar values of TLD4 compared to the examples 1 to 3.

Each Example 1 to 3 according to the invention was optimized so as :
- to provide a grey aesthetics as demonstrated by C* being ≤ 3.5;
- to provide a visible transmission TLD4 , comprised between 3% and 20% in particular to values below 5% to reach substantial opacity; and
- to maintain its near infrared transmission at a specific wavelength of 850 nm (T₈₅₀), 950 nm (T₉₅₀) and/or 1050 nm (T₁₀₅₀), above 75% and even above 80%;
- to have a very low amount of hexavalent chromium Cr6+.

Table 1 presents the optical properties for Examples 1 to 3 and comparative examples A to D, their respective amounts of iron, manganese, chromium and cobalt, their amount of FeO and Cr6+ and their determined ratios R1 and R2.

**Table 1**

| | Comp. Ex. A | Comp. Ex. B | Ex. 1 | Ex. 2 | Ex. 3 | Comp. Ex. C | Comp. Ex. D |
|---|---|---|---|---|---|---|---|
| **Fe2O3 (ppm)** | 800 | 540 | 2370 | 2980 | 5180 | 11460 | 16800 |
| **MnO (ppm)** | 941 | 800 | 4550 | 3556 | 8148 | 181 | 249 |
| **Cr2O3 (ppm)** | 1050 | 725 | 1046 | 1443 | 2829 | 68 | 72 |
| **Co (ppm)** | 155 | 156 | 121 | 151 | 265 | 177 | 250 |
| **Se (ppm)** | - | - | - | - | - | 37 | 42 |
| **TLD4 (%)** | **16,0** | **19,6** | **18,5** | **13,6** | **3,0** | **17,3** | **8,7** |
| **a*** | 0,62 | 1,5 | 2,61 | 0,12 | -0,91 | -0,1 | -1,41 |
| **b*** | -0,5 | -2,94 | -0,3 | 0,58 | 2,96 | 0,5 | 1,69 |
| **C*** | 0,80 | 3,30 | 2,63 | 0,59 | 3,10 | 0,51 | 2,20 |
| **T850** | 83,1 | 84,4 | 83,5 | 82,0 | 75,5 | 15,1 | 4,9 |
| **T950** | 88,5 | 88,8 | 88,4 | 87,7 | 84,8 | 10,9 | 3,0 |
| **T1050** | 87,6 | 87,4 | 87,8 | 86,8 | 83,1 | 9,4 | 2,5 |
| **Fe2O3*** | 29 | 26 | 30 | 37 | 32 | 98 | 98 |
| **Cr2O3*** | 38 | 35 | 13 | 18 | 18 | 0,6 | 0,4 |
| **MnO*** | 34 | 39 | 57 | 45 | 50 | 2 | 1 |
| **R1** | 0,57 | 0,55 | 0,99 | 0,99 | 0,92 | 2,01 | 2,02 |
| **R2** | 0,81 | 0,79 | 1,43 | 1,43 | 1,33 | 2,90 | 2,91 |
| **Cr⁶⁺ (ppm)** | 66 | 25 | 1 | 2 | 5 | 0 | 0 |
| **FeO (ppm)** | 1,3 | 1,0 | 21,4 | 13,4 | 23,3 | 2400 | 3700 |
| **FeO/Fe₂O₃tot (%)** | 0,16 | 0,18 | 0,90 | 0,45 | 0,45 | 20,94 | 22,02 |
| **Cr⁶⁺/Crₜₒₜ (%)** | 9,19 | 5,00 | 0,14 | 0,20 | 0,26 | 0,00 | 0,00 |

Table 1 shows that the presence of total iron, cobalt, manganese and chromium in contents according to the invention, while respecting the ratios conditions R1 and R2, makes it possible to obtain a grey glass sheet (C* below 3.5) with a visible transmission that is low to very low (18.5% to 3%) and with high near infrared transmission (75.5% to 88.4%). Indeed, chromium and manganese are present in low amount compared to iron since R1 ≤ 1.1 and provide acceptable NIR transmission for such TLD4. The low chromium and manganese contents also meet the ratio R2 ≥ 1 and, therefore according to the invention, hardly no Cr⁶⁺ is formed.

Comparative examples A and B do meet the ratio R1 ≤ 1.1 and exhibit high NIR transmissions. However, these comparative examples do not meet the ratio R2 and cause higher level of Cr⁶⁺. Comparative examples C and D, illustrate further the importance of the ratios R1 and R2 : even if these glasses provide the right grey colour, rather opaque aesthetics due to its low TL and no Cr6+ due to R2 >1, their transmissions at the near infrared wavelengths are extremely low (from 2.5% to 15.1%) due to ratio R1 well above 1.1.

### Set#2

Examples 4 to 10 correspond to glass sheets according to the invention presenting a TLD4 > 20% and ≤ 50%.

Comparative Examples E and F correspond to glasses with the required components but do not fulfil the ratio R2 defined as [Fe₂O₃* / (34 + 0,3(Cr₂O₃* - MnO*))] being equal to or greater than 1. The Comparative Example G corresponds to a glass with iron, manganese, chromium, cobalt and selenium. This comparative example does not fulfil the ratio R1 of [Fe2O3* / (49 + 0,43(Cr2O3* - MnO*))] being equal to or lower than 1.1. All comparative examples exhibit similar values of TLD4 compared to the examples 4 to 10.

Each Example 4 to 10 according to the invention was optimized so as :
- to provide a grey aesthetics as demonstrated by C* being ≤ 3.5;
- to provide a visible transmission TLD4 , comprised between >20% and ≤50% ; to maintain its near infrared transmission at a specific wavelength of 850 nm (T₈₅₀), 950 nm (T₉₅₀) and/or 1050 nm (T₁₀₅₀), higher than 84%, preferably higher than 86%;
- to have a very low Cr6+ content.

Table 2 presents the optical properties for Examples 4 to 10 and for comparative examples E to G, their respective amounts of iron, manganese, chromium and cobalt, their amount of FeO and Cr6+ and their determined ratios R1 and R2.

**Table 2**

| | **Comp ex. E** | **Comp ex. F** | **Ex. 4** | **Ex. 5** | **Ex.6** | **Ex. 7** | **Ex. 8** | **Ex. 9** | **Ex. 10** | **Comp ex G** |
|---|---|---|---|---|---|---|---|---|---|---|
| **Fe2O3 (ppm)** | 340 | 550 | 1310 | 1380 | 1590 | 1600 | 2140 | 2590 | 2460 | 1503 0 |
| **MnO (ppm)** | 409 | 755 | 4124 | 4154 | 2879 | 3078 | 4551 | 5159 | 4559 | 86 |
| **Cr2O3 (ppm)** | 359 | 727 | 456 | 475 | 754 | 719 | 1037 | 1117 | 1049 | 16 |
| **Co (ppm)** | 92 | 140 | 59 | 59 | 87 | 87 | 132 | 130 | 120 | 146 |
| **Se (ppm)** | - | - | - | - | - | - | - | - | - | 30 |
| **TLD4 (%)** | **38,4** | **22,0** | **43,4** | **44,2** | **34,8** | **33,5** | **22,1** | **20,9** | **20,5** | **32,0** |
| **a*** | 0,35 | 0,67 | 1,55 | 0,68 | -0,85 | -0,06 | -0,92 | -1,38 | 0,94 | -1,89 |
| **b*** | -0,91 | -2,28 | 0,25 | 0,06 | -0,31 | -0,3 | -0,82 | 0,3 | 0,21 | 2,26 |
| **C*** | 0,97 | 2,38 | 1,57 | 0,68 | 0,90 | 0,31 | 1,23 | 1,41 | 0,96 | 2,95 |
| **T850** | 87,6 | 85,0 | 87,8 | 87,9 | 87,0 | 86,7 | 84,8 | 84,6 | 84,4 | 18,5 |
| **T950** | 90,1 | 89,0 | 90,1 | 90,2 | 89,9 | 89,8 | 88,8 | 88,7 | 88,6 | 13,8 |
| **T1050** | 89,3 | 87,8 | 89,8 | 89,7 | 89,1 | 89,1 | 87,6 | 87,6 | 87,8 | 12,4 |
| **Fe2O3*** | 31 | 27 | 22 | 23 | 30 | 30 | 28 | 29 | 30 | 99 |
| **Cr2O3*** | 32 | 36 | 8 | 8 | 14 | 13 | 13 | 13 | 13 | 0,1 |
| **MnO*** | 37 | 37 | 70 | 69 | 55 | 57 | 59 | 58 | 57 | 1 |
| **R1** | 0,65 | 0,56 | 1,00 | 1,01 | 0,97 | 0,98 | 0,94 | 0,99 | 1,01 | 2,04 |
| **R2** | 0,94 | 0,81 | 1,45 | 1,47 | 1,40 | 1,42 | 1,36 | 1,44 | 1,46 | 2,93 |
| **Cr⁶⁺ (ppm)** | 22 | 30 | 0 | 0 | 0 | 0 | 1 | 1 | 1 | 0 |
| **FeO (ppm)** | 0,3 | 2,4 | 2,3 | 12,4 | 4,9 | 14,4 | 15,4 | 11,6 | 21,9 | 2299, 0 |
| **FeO/Fe₂O₃tot (%)** | 0,09 | 0,44 | 0,18 | 0,89 | 0,31 | 0,90 | 0,72 | 0,45 | 0,89 | 15,30 |
| **Cr⁶⁺/Crₜₒₜ (%)** | 8,96 | 6,03 | 0,00 | 0,00 | 0,00 | 0,00 | 0,14 | 0,13 | 0,14 | 0,00 |

Table 2 shows that the presence of total iron, manganese chromium and cobalt in contents according to the invention while respecting the ratios conditions R1 and R2 makes it possible to obtain a grey glass sheet with a visible transmission that is medium (20% < TLD4 ≤ 50%) and with high near infrared transmission at 1050 nm (84.6% to 90.2%).

Comparative examples E and F, illustrate that, even if these glasses comprise the right amounts of iron, manganese, chromium and cobalt to have a grey colour and elevated transmissions between 850 and 1050 nm they fail to balance such components at the proper ratio R2, expressed by a much higher level of the hexavalent form of chromium (22 and 30 ppm compared to examples 4 and 10 (≤ 1 ppm). Comparative example G illustrates that, even if this glass provides the right TL, its transmissions at the near infrared wavelengths are extremely low (from 12.4% to 18.5%) due to its ratio R1 well above 1.1.

### Set#3

Examples 11 to 14 correspond to glass sheets according to the invention, all presenting a TLD4 greater than 50%, preferably comprised between greater than 50% and lower than or equal to 65% (50% < TLD4 ≤ 65%). Comparative Example H corresponds to a glass composition with the required components but does not fulfil the ratio R2 defined as [Fe₂O₃* / (34 + 0,3(Cr₂O₃* - MnO*))] being equal to or greater than 1. The Comparative Example J corresponds to a glass with iron, manganese, chromium, cobalt and selenium. This comparative example does not fulfil the ratio R1 of [Fe2O3* / (49 + 0,43(Cr2O3* - MnO*))] being equal to or lower than 1.1. All comparative examples exhibit similar values of TLD4 compared to the examples 11 to 14.

Each Example 11 to 14 according to the invention was optimized so as :
- to provide a grey aesthetics as demonstrated by C* being ≤ 3.5;
- to provide a visible transmission TLD4 , 50% < TLD4 ≤ 65%; to maintain its near infrared transmission at a specific wavelength of 850 nm (T₈₅₀), 950 nm (T₉₅₀) and/or 1050 nm (T₁₀₅₀), higher than 88%, preferably higher than 90%;
- to have a very low Cr6+ content

Table 3 presents the optical properties for Examples 11 to 14 and for comparative examples H and J, their respective amounts of iron, manganese, chromium and cobalt, the amount of FeO and Cr6+ and their determined ratios R1 and R2.

| | Comp. Ex H | Ex. 11 | Ex. 12 | Ex. 13 | Ex. 14 | Comp. Ex J |
|---|---|---|---|---|---|---|
| **Fe2O3 (ppm)** | 170 | 390 | 680 | 640 | 1090 | 3710 |
| **MnO (ppm)** | 205 | 263 | 1237 | 556 | 2675 | 202 |
| **Cr2O3 (ppm)** | 180 | 174 | 273 | 346 | 361 | 17 |
| **Co (ppm)** | 30 | 38 | 33 | 50 | 45 | 62 |
| **Se (ppm)** | - | - | - | - | - | 19 |
| **TLD4 (%)** | **64,2** | **65,2** | **61,5** | **58,3** | **52,1** | **54,4** |
| **a*** | 1,32 | 0,07 | 0,12 | -2,03 | 0,78 | 0,6 |
| **b*** | -0,73 | -2,37 | -0,05 | -2,07 | -0,07 | -1,9 |
| **C*** | 1,51 | 2,37 | 0,13 | 2,90 | 0,78 | 1,99 |
| **T850** | 90,0 | 90,5 | 89,6 | 90,0 | 88,7 | 54,5 |
| **T950** | 91,2 | 91,3 | 91,0 | 91,0 | 90,6 | 49,7 |
| **T1050** | 91,1 | 90,9 | 90,7 | 90,4 | 90,3 | 47,8 |
| **Fe2O3*** | 31 | 47 | 31 | 42 | 26 | 94 |
| **Cr2O3*** | 32 | 21 | 12 | 22 | 9 | 0,4 |
| **MnO*** | 37 | 32 | 56 | 36 | 65 | 5 |
| **R1** | 0,65 | 1,06 | 1,03 | 0,96 | 1,06 | 2,01 |
| **R2** | 0,94 | 1,53 | 1,49 | 1,39 | 1,54 | 2,90 |
| **Cr⁶⁺ (ppm)** | 11 | 2 | 0 | 0,0 | 0 | 0 |
| **FeO (ppm)** | 0,2 | 3,5 | 6,0 | 2,8 | 9,8 | 630 |
| **FeO/Fe₂O₃tot (%)** | 0,09 | 0,89 | 0,89 | 0,44 | 0,90 | 16,98 |
| **Cr⁶⁺/Crₜₒₜ (%)** | 8,93 | 1,68 | 0,00 | 0,00 | 0,00 | 0,00 |

Table 3 shows that the presence of total iron, cobalt, manganese and chromium in contents according to the invention while respecting the ratio conditions R1 and R2 makes it possible to obtain a grey glass sheet with a visible transmission that is medium high (51% to 65%) and with high near infrared transmission (88.7% to 91.3%) while keeping very low amount of Cr6+.

Comparative example H illustrates that, even if this glass comprises the right amounts of iron, manganese, chromium and cobalt, but fails to balance such components at the proper ratio R2, such composition can provide the right grey aesthetics, maintains very satisfactory near infrared transmissions but demonstrates a much higher level of the hexavalent from of chromium. About 10% of the chromium introduced in the glass composition remains in the toxic hexavalent form (Cr6+/Crtot = 8,9%).

Comparative example J, illustrates that by lowering the chromium content, the hexavalent from of chromium is avoided but by failing to meet the R1 ratio, its transmissions at the near infrared wavelengths are rather poor (from 47.8% to 54.5%) for glasses with intermediate light transmissions.

### Figure 1

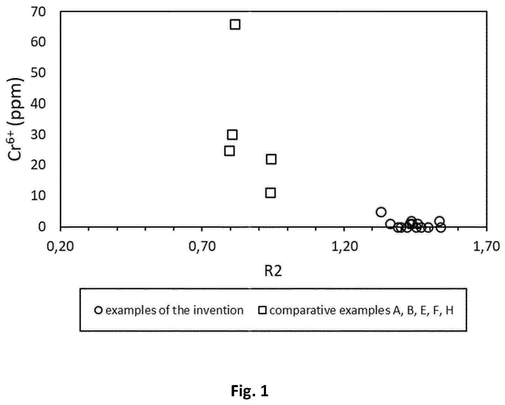

Figure 1 illustrates the criticality of the ratio R2 within the present invention to obtain the lowest possible concentration of the toxic hexavalent form of chromium. The examples 1 to 14 from Sets # 1 to 3 of the present invention have been compared with comparatives examples A, B, E, F and H that do not meet the R2 ratio requirement.

## Claims

1. A glass sheet of silicate-type having a composition comprising, in a content expressed as weight percentages by total weight of glass:
a. Total iron, expressed as Fe₂O₃ 0.02% - 0.8 %,
b. Manganese, expressed as MnO ≥ 0.02 %,
c. Chromium, expressed as Cr₂O₃ 0.01% - 0.4%,
d. Cobalt, expressed as Co 0.003% - 0.03%
and wherein
the ratio R1 defined as [Fe₂O₃* / (49 + 0,43(Cr₂O₃* - MnO*))] is equal to or lower than 1.1; and the ratio R2 defined as [Fe₂O₃* / (34 + 0,3(Cr₂O₃* - MnO*))] is equal to or greater than 1; wherein Fe₂O₃*, MnO* and Cr₂O₃* are relative percentages with respect to the sum of the contents of total iron, manganese and chromium (Fe₂O₃ + MnO + Cr₂O₃).

2. A glass sheet according to claim 1 wherein the ratio R2 defined as [Fe₂O₃* / (34 + 0,3(Cr₂O₃* - MnO*))] is equal to or greater than 1.2, preferably is equal to or greater than 1.3.

3. A glass sheet according to any one of the preceding claims wherein the composition comprises a Fe²⁺ content, expressed in the form of FeO equal to or less than 50 ppm (FeO ≤ 50 ppm), preferably equal to or less than 25 ppm (FeO ≤ 25 ppm).

4. A glass sheet according to any one of the preceding claims wherein the composition comprises a percentage of FeO relative to Fe₂O₃ below 1%, preferably below 0.9% by weight of the total composition.

5. A glass sheet according to any one of the preceding claims wherein the composition has a Color index C* = (a*²+b*²)^{1/2} equal to or lower than 3,5 wherein a* and b* are CIELab values measured for a sheet thickness of 4 mm, in transmission with illuminant D65, 10°, SCI.

6. A glass sheet according to any one of preceding claims comprising hexavalent chromium equal to or lower than 10 ppm (Cr⁶⁺ ≤ 10ppm), preferably equal to or lower than 5 ppm (Cr⁶⁺ ≤ 5 ppm) and more preferably free of hexavalent chromium (Cr⁶⁺ = 0ppm).

7. A glass sheet according to any one of the preceding claims having a visible transmission (TLD4) measured with illuminant D65 for a sheet thickness of 4 mm at a solid angle of observation of 2° according to standard ISO9050 is lower than or equal to 20% (TLD4 ≤ 20%), preferably equal to or greater than 2% and lower than or equal to 20% (2% ≤ TLD4 ≤ 20%).

8. A glass sheet according to claim 7 wherein the composition comprises in a content expressed as weight percentages by total weight of glass:
a. Total iron, expressed as Fe₂O₃ 0.2% - 0.8 %, preferably 0.2% to 0.6%;
b. Manganese, expressed as MnO 0.1 % - 1%, preferably 0.3% - 0.9%;
c. Chromium, expressed as Cr₂O₃ 0.05% - 0.4%, preferably 0.1% - 0.3%; and
d. Cobalt, expressed as Co 0.01% - 0.03%.

9. A glass sheet according to any one of the preceding claims 7 to 8, having an infrared transmission (T₈₅₀₋₉₅₀₋₁₀₅₀), measured for a sheet thickness of 4 mm at a solid angle of observation of 2° according to standard ISO9050, at a specific wavelength of 850 nm (T₈₅₀), 950 nm (T₉₅₀) and/or 1050 nm (T₁₀₅₀), higher than 75%, preferably higher than 80%.

10. A glass sheet according to any one of the preceding claims 1 to 6 having a visible transmission (TLD4) measured with illuminant D65 for a sheet thickness of 4 mm at a solid angle of observation of 2° according to standard ISO9050 greater than 20% and lower than or equal to 50% (20% < TLD4 ≤ 50%).

11. A glass sheet according to claim 10 wherein the composition comprises in a content expressed as weight percentages by total weight of glass:
a. Total iron, expressed as Fe₂O₃ 0.1% - 0.3%, preferably 0.12% - 0.28%;
b. Manganese, expressed as MnO 0.15 % - 0.6%, preferably 0.2% - 0.55%;
c. Chromium expressed as Cr₂O₃ 0.04% - 0.15%, preferably 0.045% - 0.12%; and
d. Cobalt, expressed as Co 0.005%- 0.015%.

12. A glass sheet according to any one of the preceding claims 10 to 11, having an infrared transmission (T₈₅₀₋₉₅₀₋₁₀₅₀), measured for a sheet thickness of 4 mm at a solid angle of observation of 2° according to standard ISO9050, at a specific wavelength of 850 nm (T₈₅₀), 950 nm (T₉₅₀) and/or 1050 nm (T₁₀₅₀), higher than 84%, preferably higher than 86%.

13. A glass sheet according to any one of the preceding claims 1 to 6 having a visible transmission (TLD4) measured with illuminant D65 for a sheet thickness of 4 mm at a solid angle of observation of 2° according to standard ISO9050, is greater than 50% (50% < TLD4), preferably comprised between greater than 50% and lower than or equal to 65% (50% < TLD4 ≤ 65%).

14. A glass sheet according to claim 13 wherein the composition comprises in a content expressed as weight percentages by total weight of glass:
a. Total iron, expressed as Fe₂O₃ 0.02% - 0.15%, preferably 0.035%- 0.11%;
b. Manganese, expressed as MnO 0.02 % - 0.4%, preferably 0.025% - 0.28%;
c. Chromium, expressed as Cr₂O₃ 0.01% - 0.07%, preferably 0.015% - 0.04%; and
d. Cobalt, expressed as Co 0.003% - 0.008%.

15. A glass sheet according to any one of the preceding claims 13 to 14, having an infrared transmission (T₈₅₀₋₉₅₀₋₁₀₅₀), a sheet thickness of 4 mm at a solid angle of observation of 2° according to standard ISO9050, at a specific wavelength of 850 nm (T₈₅₀), 950 nm (T₉₅₀) and/or 1050 nm (T₁₀₅₀), higher than 88%, preferably higher than 90%.

## Patentansprüche

1. Glasscheibe vom Silicattyp mit einer Zusammensetzung, die mit einem als Gewichtsprozentwerte in Bezug auf das Glas-Gesamtgewicht ausgedrückten Gehalt Folgendes umfasst:
a. Gesamteisen, ausgedrückt als Fe₂O₃, 0,02 % - 0,8 %,
b. Mangan, ausgedrückt als MnO, ≥ 0,02 %,
c. Chrom, ausgedrückt als Cr₂O₃, 0,01 % - 0,4 %,
d. Kobalt, ausgedrückt als Co, 0,003 % - 0,03 %
und wobei
das Verhältnis R1, das als [Fe₂O₃* / (49 + 0,43 (Cr₂O₃* - MnO*))] definiert ist, gleich oder kleiner als 1,1 ist und das Verhältnis R2, das als [Fe₂O₃* / (34 + 0,3 (Cr₂O₃* - MnO*))] definiert ist, gleich oder größer als 1 ist;
wobei Fe₂O₃*, MnO* und Cr₂O₃* relative Prozentwerte in Bezug auf die Summe der Gehalte an Gesamteisen, Mangan und Chrom (Fe₂O₃ + MnO + Cr₂O₃) sind.

2. Glasscheibe nach Anspruch 1, wobei das Verhältnis R2, das als [Fe₂O₃* / (34 + 0,3 (Cr₂O₃* - MnO*))] definiert ist, gleich oder größer als 1,2, vorzugsweise gleich oder größer als 1,3, ist.

3. Glasscheibe nach einem der vorhergehenden Ansprüche, wobei die Zusammensetzung einen Fe²⁺-Gehalt, ausgedrückt in der Form von FeO, gleich oder kleiner als 50 ppm (FeO ≤ 50 ppm), vorzugsweise gleich oder kleiner als 25 ppm (FeO ≤ 25 ppm), aufweist.

4. Glasscheibe nach einem der vorhergehenden Ansprüche, wobei die Zusammensetzung einen Prozentwert an FeO in Bezug auf Fe₂O₃ von unter 1 Gew.-%, vorzugsweise unter 0,9 Gew.-%, der gesamten Zusammensetzung umfasst.

5. Glasscheibe nach einem der vorhergehenden Ansprüche, wobei die Zusammensetzung einen Farbindex C* = (a*² + b*²)^{1/2} gleich oder kleiner als 3,5 aufweist, wobei a* und b* CIELab-Werte sind, die für eine Scheibendicke von 4 mm in Transmission mit einer Lichtquelle D65, 10°, SCI, gemessen werden.

6. Glasscheibe nach einem der vorhergehenden Ansprüche, die gleich oder weniger als 10 ppm sechswertiges Chrom (Cr⁶⁺ ≤ 10 ppm), vorzugsweise gleich oder weniger als 5 ppm (Cr⁶⁺ ≤ 5 ppm), umfasst und stärker bevorzugt frei von sechswertigem Chrom (Cr⁶⁺ = 0 ppm) ist.

7. Glasscheibe nach einem der vorhergehenden Ansprüche mit einer Transmission im Sichtbaren (TLD4), die mit einer Lichtquelle D65 bei einer Scheibendicke von 4 mm bei einem festen Betrachtungswinkel von 2° gemäß der Norm ISO9050 gemessen wird, von kleiner als oder gleich 20 % (TLD4 ≤ 20 %), vorzugsweise gleich oder größer als 2 % und kleiner als oder gleich 20 % (2 % ≤ TLD4 ≤ 20 %).

8. Glasscheibe nach Anspruch 7, wobei die Zusammensetzung mit einem als Gewichtsprozentwerte in Bezug auf das Glas-Gesamtgewicht ausgedrückten Gehalt Folgendes umfasst:
a. Gesamteisen, ausgedrückt als Fe₂O₃, 0,2 % - 0,8 %, vorzugsweise 0,2 % - 0,6 %;
b. Mangan, ausgedrückt als MnO, 0,1 % - 1 %, vorzugsweise 0,3 % - 0,9 %;
c. Chrom, ausgedrückt als Cr₂O₃, 0,05 % - 0,4 %, vorzugsweise 0,1 % - 0,3 %; und
d. Kobalt, ausgedrückt als Co, 0,01 % - 0,03 %.

9. Glasscheibe nach einem der vorhergehenden Ansprüche 7 bis 8 mit einer Infrarot-Transmission (T₈₅₀₋₉₅₀₋₁₀₅₀), gemessen bei einer Scheibendicke von 4 mm bei einem festen Betrachtungswinkel von 2° gemäß der Norm ISO9050, bei einer spezifischen Wellenlänge von 850 nm (T₈₅₀), 950 nm (T₉₅₀) und/oder 1050 nm (T₁₀₅₀) von größer als 75 %, vorzugsweise größer als 80 %.

10. Glasscheibe nach einem der vorhergehenden Ansprüche 1 bis 6 mit einer Transmission im Sichtbaren (TLD4), die mit einer Lichtquelle D65 bei einer Scheibendicke von 4 mm mit einem festen Beobachtungswinkel von 2° gemäß der Norm ISO9050 gemessen wird, von größer 20 % und kleiner als oder gleich 50 % (20 % < TLD4 ≤ 50 %).

11. Glasscheibe nach Anspruch 10, wobei die Zusammensetzung mit einem als Gewichtsprozentwerte in Bezug auf das Glas-Gesamtgewicht ausgedrückten Gehalt Folgendes umfasst:
a. Gesamteisen, ausgedrückt als Fe₂O₃, 0,1 % - 0,3 %, vorzugsweise 0,12 % - 0,28 %;
b. Mangan, ausgedrückt als MnO, 0,15 % - 0,6 %, vorzugsweise 0,2 % - 0,55 %;
c. Chrom, ausgedrückt als Cr₂O₃, 0,04 % - 0,15 %, vorzugsweise 0,045 % - 0,12 %; und
d. Kobalt, ausgedrückt als Co, 0,005 % - 0,015 %.

12. Glasscheibe nach einem der vorhergehenden Ansprüche 10 bis 11 mit einer Infrarot-Transmission (T₈₅₀₋₉₅₀₋₁₀₅₀), gemessen bei einer Scheibendicke von 4 mm bei einem festen Betrachtungswinkel von 2° gemäß der Norm ISO9050, bei einer spezifischen Wellenlänge von 850 nm (T₈₅₀), 950 nm (T₉₅₀) und/oder 1050 nm (T₁₀₅₀) von größer als 84 %, vorzugsweise größer als 86 %.

13. Glasscheibe nach einem der vorhergehenden Ansprüche 1 bis 6 mit einer Transmission im Sichtbaren (TLD4), die mit einer Lichtquelle D65 bei einer Scheibendicke von 4 mm bei einem festen Betrachtungswinkel von 2° gemäß der Norm ISO9050 gemessen wird, von größer als 50 % (50 % < TLD4), vorzugsweise zwischen größer als 50 % und kleiner als oder gleich 65 % (50 % < TLD4 ≤ 65 %).

14. Glasscheibe nach Anspruch 13, wobei die Zusammensetzung mit einem als Gewichtsprozentwerte in Bezug auf das Glas-Gesamtgewicht ausgedrückten Gehalt Folgendes umfasst:
a. Gesamteisen, ausgedrückt als Fe₂O₃, 0,02 % - 0,15 %, vorzugsweise 0,035 % - 0,11 %;
b. Mangan, ausgedrückt als MnO, 0,02 % - 0,4 %, vorzugsweise 0,025 % - 0,28 %;
c. Chrom, ausgedrückt als Cr₂O₃, 0,01 % - 0,07 %, vorzugsweise 0,015 % - 0,04 %; und
d. Kobalt, ausgedrückt als Co, 0,003 % - 0,008 %.

15. Glasscheibe nach einem der vorhergehenden Ansprüche 13 bis 14 mit einer Infrarot-Transmission (T₈₅₀₋₉₅₀₋₁₀₅₀), einer Scheibendicke von 4 mm bei einem festen Betrachtungswinkel von 2° gemäß der Norm ISO9050, bei einer spezifischen Wellenlänge von 850 nm (T₈₅₀), 950 nm (T₉₅₀) und/oder 1050 nm (T₁₀₅₀) von größer als 88 %, vorzugsweise größer als 90 %.

## Revendications

1. Feuille de verre de type silicate ayant une composition comprenant, en une teneur exprimée en pourcentages en poids par poids total de verre :
a. fer total, exprimé en Fe₂O₃ 0,02 % - 0,8 %,
b. manganèse, exprimé en MnO ≥ 0,02 %,
c. chrome, exprimé en Cr₂O₃ 0,01 % - 0,4 %,
d. cobalt, exprimé en Co 0,003 % - 0,03 %
et dans laquelle
le rapport R1 défini comme [Fe₂O₃* / (49 + 0,43(Cr₂O₃* - MnO*))] est égal ou inférieur à 1,1 ; et le rapport R2 défini comme [Fe₂O₃* / (34 + 0,3(Cr₂O₃* - MnO*))] est égal ou supérieur à 1 ; où Fe₂O₃*, MnO* et Cr₂O₃* sont des pourcentages relatifs par rapport à la somme des teneurs en fer total, manganèse et chrome (Fe₂O₃ + MnO + Cr₂O₃).

2. Feuille de verre selon la revendication 1, dans laquelle le rapport R2 défini comme [Fe₂O₃* / (34 + 0,3(Cr₂O₃* - MnO*))] est égal ou supérieur à 1,2, de préférence égal ou supérieur à 1,3.

3. Feuille de verre selon l'une quelconque des revendications précédentes, dans laquelle la composition comprend une teneur en Fe²⁺, exprimée sous la forme de FeO égale ou inférieure à 50 ppm (FeO ≤ 50 ppm), de préférence égale ou inférieure à 25 ppm (FeO ≤ 25 ppm).

4. Feuille de verre selon l'une quelconque des revendications précédentes, dans laquelle la composition comprend un pourcentage de FeO par rapport à Fe₂O₃ inférieur à 1 %, de préférence inférieur à 0,9 % en poids de la composition totale.

5. Feuille de verre selon l'une quelconque des revendications précédentes, dans laquelle la composition a un indice de couleur C* = (a*²+b*²)^{1/2} égal ou inférieur à 3,5, dans laquelle a* et b* sont des valeurs CIELab mesurées pour une épaisseur de feuille de 4 mm, en transmission avec l'illuminant D65, 10°, SCI.

6. Feuille de verre selon l'une quelconque des revendications précédentes, comprenant du chrome hexavalent en une quantité égale ou inférieure à 10 ppm (Cr⁶⁺ ≤ 10 ppm), de préférence égale ou inférieure à 5 ppm (Cr⁶⁺ ≤ 5 ppm) et plus préférablement qui est exempte de chrome hexavalent (Cr⁶⁺= 0 ppm).

7. Feuille de verre selon l'une quelconque des revendications précédentes ayant une transmission visible (TLD4) mesurée avec l'illuminant D65 pour une épaisseur de feuille de 4 mm à un angle solide d'observation de 2° selon la norme ISO9050 inférieure ou égale à 20 % (TLD4 ≤ 20 %), de préférence égale ou supérieure à 2 % et inférieure ou égale à 20 % (2 % ≤ TLD4 ≤ 20 %).

8. Feuille de verre selon la revendication 7, la composition comprenant en une teneur exprimée en pourcentages en poids en poids total de verre :
a. fer total, exprimé en Fe₂O₃ 0,2 % - 0,8 %, de préférence 0,2 % à 0,6 % ;
b. manganèse, exprimé en MnO 0,1 % - 1 %, de préférence 0,3 % - 0,9 % ;
c. chrome, exprimé en Cr₂O₃ 0,05 % - 0,4 %, de préférence 0,1 % - 0,3 % ; et
d. cobalt, exprimé en Co 0,01 % - 0,03 %.

9. Feuille de verre selon l'une quelconque des revendications précédentes 7 à 8, ayant une transmission infrarouge (T₈₅₀₋₉₅₀₋₁₀₅₀), mesurée pour une épaisseur de feuille de 4 mm à un angle solide d'observation de 2° selon la norme ISO9050, à une longueur d'onde spécifique de 850 nm (T₈₅₀), 950 nm (T₉₅₀) et/ou 1050 nm (T₁₀₅₀), supérieure à 75 %, de préférence supérieure à 80 %.

10. Feuille de verre selon l'une quelconque des revendications précédentes 1 à 6 ayant une transmission visible (TLD4) mesurée selon l'illuminant D65 pour une épaisseur de feuille de 4 mm à un angle solide d'observation de 2° selon la norme ISO9050 supérieure à 20 % et inférieure ou égale à 50 % (20 % < TLD4 ≤ 50 %).

11. Feuille de verre selon la revendication 10, la composition comprenant en une teneur exprimée en pourcentages en poids en poids total de verre :
a. fer total, exprimé en Fe₂O₃ 0,1 % - 0,3 %, de préférence 0,12 % - 0,28 % ;
b. manganèse, exprimé en MnO 0,15 % - 0,6 %, de préférence 0,2 % - 0,55 % ;
c. chrome, exprimé en Cr₂O₃ 0,04 % - 0,15 %, de préférence 0,045 % - 0,12 % ; et
d. cobalt, exprimé en Co 0,005 % - 0,015 %.

12. Feuille de verre selon l'une quelconque des revendications précédentes 10 à 11, ayant une transmission infrarouge (T₈₅₀₋₉₅₀₋₁₀₅₀), mesurée pour une épaisseur de feuille de 4 mm à un angle solide d'observation de 2° selon la norme ISO9050, à une longueur d'onde spécifique de 850 nm (T₈₅₀), 950 nm (T₉₅₀) et/ou 1050 nm (T₁₀₅₀), supérieure à 84 %, de préférence supérieure à 86 %.

13. Feuille de verre selon l'une quelconque des revendications précédentes 1 à 6 ayant une transmission visible (TLD4) mesurée avec l'illuminant D65 pour une épaisseur de feuille de 4 mm à un angle solide d'observation de 2° selon la norme ISO9050 supérieure à 50 % (50 % < TLD4), de préférence comprise entre supérieure à 50 % et inférieure ou égale à 65 % (50 % < TLD4 ≤ 65 %).

14. Feuille de verre selon la revendication 13, la composition comprenant en une teneur exprimée en pourcentages en poids en poids total de verre :
a. fer total, exprimé en Fe₂O₃ 0,02 % - 0,15 %, de préférence 0,035 % - 0,11 % ;
b. manganèse, exprimé en MnO 0,02 % - 0,4 %, de préférence 0,025 % - 0,28 % ;
c. chrome, exprimé en Cr₂O₃ 0,01 % - 0,07 %, de préférence 0,015 % - 0,04 % ; et
d. cobalt, exprimé en Co 0,003 % - 0,008 %.

15. Feuille de verre selon l'une quelconque des revendications précédentes 13 à 14, ayant une transmission infrarouge (T₈₅₀₋₉₅₀₋₁₀₅₀), une épaisseur de feuille de 4 mm à un angle solide d'observation de 2° selon la norme ISO9050, à une longueur d'onde spécifique de 850 nm (T₈₅₀), 950 nm (T₉₅₀) et/ou 1050 nm (T₁₀₅₀), supérieure à 88 %, de préférence supérieure à 90 %.
